# EUROPEAN PATENT SPECIFICATION

(11) **EP 2 982 723 B1**
(45) Date of publication and mention of the grant of the patent: **11.04.2018**
(21) Application number: 14778676.8
(22) Date of filing: 27.02.2014
(51) Int. Cl.: C09J 4/00, C09J 4/02, C09J 7/02, G06F 3/041

(54) **ADHESIVE COMPOSITION FOR TOUCH PANEL, ADHESIVE FILM AND TOUCH PANEL**
HAFTZUSAMMENSETZUNG FÜR EINEN BERÜHRUNGSBILDSCHIRM, HAFTFILM UND BERÜHRUNGSBILDSCHIRM
COMPOSITION ADHÉSIVE POUR ÉCRAN TACTILE, FILM ADHÉSIF ET ÉCRAN TACTILE

(30) Priority: 05.04.2013 KR 20130037598
(43) Date of publication of application: 10.02.2016
(73) Proprietor: LG CHEM, LTD., Yeongdeungpo-gu Seoul 07336 (KR)
(72) Inventor: YOON, Chan Oh, Cheongju-si Chungcheongbuk-do 361-230 (KR); PARK, Eun Kyung, Seoul 122-881 (KR); JUNG, Bu Gi, Anyang-si Gyeonggi-do 431-837 (KR); LEE, Jae Gwan, Daejeon 305-729 (KR); KIM, Jang Soon, Seongnam-si Gyeonggi-do 463-420 (KR); PARK, Sung Chan, Seoul 130-767 (KR); KIM, Won Ho, Seoul 151-848 (KR)
(74) Representative: Cabinet Plasseraud
(86) International application number: PCT/KR2014/001622
(87) International publication number: WO 2014/163299

(56) References cited:
- EP-A1- 2 722 377
- WO-A1-2012/112856
- WO-A1-2013/048934
- JP-A- 2010 007 044
- KR-A- 20120 084 265
- US-A1- 2012 094 037
- US-A1- 2012 214 936

## Description

### Technical Field

The present invention relates to an adhesive composition for a touch panel, an adhesive film, and a touch panel.

### Background Art

Recently, electronic devices such as personal digital assistant (PDA), a mobile communication terminal, a vehicle navigation, form a large market. Technical goals to be pursed of the above-described electronic devices mainly include thin thickness, light weight, low power consumption, higher resolution, and high brightness. Meanwhile, in electronic devices equipped with a touch screen or a touch panel switch in an input operation portion, a transparent conductive plastic film is used for light weight, breakage prevention. An example of the transparent conductive plastic film includes a film having a polyethylene terephthalate (PET) film as a substrate, and having a conductive layer such as an indium tin oxide (ITO) formed on one surface of the PET film, wherein the film is stacked on a conductive glass, a reinforcement material, a decorative film, and the like, by an adhesive layer.

In the touch screen or the touch panel, adhesive used for attachment of a transparent conductive film requires various physical properties such as a low dielectric constant for improving sensitivity of the touch panel and durability capable of inhibiting occurrence of white turbidity phenomenon when the touch screen or the touch panel is exposed to severe conditions such as high temperature or high humidity conditions US 2012/094037 A1, EP 2 722 377 A1 and US 2012/214936 A1 for example relate to adhesive compositions for touch panels having low dielectric constant.

### Disclosure

### Technical Problem

An aspect of the present invention is to provide an adhesive composition according to claims 1 to 7 for a touch panel having excellent sensitivity to a touch panel and excellent reliability against white turbidity phenomenon.

Another aspect of the present invention is to provide an adhesive film according to claims 8 to 10 using the adhesive composition for a touch panel.

Still another aspect of the present invention is to provide a touch panel according to claims 11 and 12 to which the adhesive film is applied.

### Technical Solution

In accordance with one aspect of the present invention, there is provided an adhesive composition for a touch panel, comprising: a hydrophilic functional group-containing monomer, a (meth)acrylic acid ester-based monomer, and an adhesion promoter, wherein the adhesion promoter is at least one selected from the group consisting of an amine-based liquid polymer, polyamine, a petroleum resin, polybutene, an acrylic modified resin, an acryloyl morpholine resin, and combinations thereof, wherein the adhesion promoter have a content of 1 part by weight to 20 parts by weight, based on 100 parts by weight of a (meth)acrylic acid ester based monomer, and wherein a dielectric constant of the adhesive composition at a frequency of 100kHz to 2MHz is 3.5 or less, and wherein the (meth)acrylic acid ester-based monomer is an alkyl (meth)acrylate. The hydrophilic functional group-containing monomer may be at least one selected from the group consisting of a hydroxyl group-containing monomer, an amino group-containing monomer, a carboxyl group-containing monomer, a sulfonic group-containing monomer, a morpholine group-containing monomer, a glycidyl group-containing monomer, and combinations thereof.

The hydrophilic functional group-containing monomer may have a content of 30 parts by weight or less, based on 100 parts by weight of a (meth)acrylic acid ester-based monomer.

A molecular weight of a polymer of the (meth)acrylic acid ester-based monomer and the hydrophilic functional group-containing monomer may be about 600,000 to about 1,200,000.

The (meth)acrylic acid ester-based monomer may be alkyl(meth)acrylate, and alkyl of the alkyl(meth)acrylate is linear or branched C₁-C₁₄ alkyl.

The (meth)acrylic acid ester-based monomer may be at least one selected from the group consisting of methyl (meth)acrylate, ethyl (meth)acrylate, n-propyl (meth)acrylate, isopropyl (meth)acrylate, n-butyl (meth)acrylate, t-butyl (meth)acrylate, sec-butyl (meth)acrylate, pentyl (meth)acrylate, 2-ethylhexyl (meth)acrylate, 2-ethylbutyl (meth)acrylate, n-octyl (meth)acrylate, isooctyl (meth)acrylate, isononyl (meth)acrylate, lauryl (meth)acrylate, tetradecyl (meth)acrylate, and combinations thereof.

The adhesive composition for a touch panel includes an adhesion promoter.

The adhesion promoter is at least one selected from the group consisting of an amine-based liquid polymer, polyamine, a petroleum resin, polybutene, an acrylic modified resin, an acryloyl morpholine resin, and combinations thereof.

The adhesive composition for a touch panel may further include: a photoinitiator.

The photoinitiator may be at least one selected from the group consisting of a benzoin-based initiator, a hydroxy ketone-based initiator, an amino-ketone-based initiator, a caprolactam initiator and combinations thereof.

In accordance with another aspect of the present invention, there is provided an adhesive film including an adhesive layer including a cured product of the adhesive composition for a touch panel as described above.

A dielectric constant of the adhesive layer at a frequency of 100kHz to 2MHz may be about 3.5 or less.

The adhesive layer may have a thickness of 50 µm to 300 µm.

In accordance with still another aspect of the present invention, there is provided a touch panel including: a conductive plastic film having a conductive layer formed on one surface; and an adhesive layer attached onto the conductive layer and including a cured product of the adhesive composition for a touch panel as described above.

The conductive plastic film may be a polyethylene terephthalate film having an indium tin oxide (ITO) (conductive metal oxide) layer formed on one surface thereof.

### Advantageous Effects

The adhesive composition for a touch panel may provide an adhesive film having excellent sensitivity to a touch panel and excellent reliability against white turbidity phenomenon.

### Description of Drawings

FIG. 1 is a cross-sectional view schematically illustrating an adhesive film according to an exemplary embodiment of the present invention.
FIG. 2 is a cross-sectional view schematically illustrating a touch panel according to another exemplary embodiment of the present invention.
FIG. 3 is a cross-sectional view schematically illustrating a touch panel according to another exemplary embodiment of the present invention.
FIG. 4 is a graph illustrating a dielectric constant at a frequency with respect to each adhesive film manufactured by Examples and Comparative Examples.
FIG. 5 is a graph illustrating peel strength of each adhesive film manufactured by Examples and Comparative Examples.
FIG. 6 is a graph illustrating whether there is white turbidity phenomenon of each adhesive film manufactured by Examples and Comparative Examples.

### Best Mode

Hereinafter, exemplary embodiments of the present invention will be described in detail. However, the following examples are only provided as one embodiment of the present invention, and the present invention is not limited to the following Examples.

The drawings and description are to be regarded as illustrative in nature and not restrictive. Like reference numerals designate like elements throughout the specification.

In the drawings, the thickness of layers, films, panels, regions, are exaggerated for clarity. In the drawings, the thickness of layers, films, panels, regions, are exaggerated for clarity.

Hereinafter, formation of any configuration in "an upper part (or a lower part) or "on (or below)" of a substrate means that any configuration is formed while contacting an upper surface (or a lower surface) of the substrate, and is not limited to exclude other constitution between the substrate and any configuration formed on (or below) the substrate.

### Adhesive composition for touch panel

In an exemplary embodiment of the present invention, there is provided an adhesive composition according to claims 1 to 7 for a touch panel including a hydrophilic functional group-containing monomer, wherein a dielectric constant at a frequency of 100kHz to 2MHz is 3.5 or less.

Here, the dielectric constant indicates a value showing electrical properties of a non-conductor, which means how weak an electric field is based on an initial electric field. The polarity degree of the solvent and the copolymer may be represented by the dielectric constant, wherein when polarity is high, that is, polarity exists, the dielectric constant is highly measured, and when polarity is low, which is non-polar, the dielectric constant is low measured.

Conventional three-dimensional copolymer, that form an adhesive composition for a touch panel were mostly acrylic compositions, and generally had high dielectric constants, and had a difficulty in controlling a dielectric constant. A high dielectric constant means that the electric field is much weaker than the initial electric field, and even there is stimulus such as touch, a touch panel to which the adhesive composition is applied may not recognize signal by the weak electric field, thereby deteriorating sensitivity. Accordingly, in an exemplary embodiment of the present invention, a dielectric constant at a predetermined level or below may allow to be secured in order to improve sensitivity of the adhesive composition to stimulus such as touch, as compared to the conventional adhesive compositions.

The adhesive composition includes a hydrophilic functional group-containing monomer, such that a dielectric constant for a touch panel at a frequency of 100kHz to 2MHz may be 3.5 or less. The dielectric constant at a frequency of 100kHz to 2MHz is 3.5 or less, which secures a low dielectric constant as compared to the related art. Accordingly, the adhesive composition may have increased sensitivity due to signal improvement to stimulus such as touch, or the like, and may provide an adhesive film having a fast response time due to the increased sensitivity.

The hydrophilic functional group-containing monomer may be at least one selected from the group consisting of a hydroxyl group-containing monomer, an amino group-containing monomer, a carboxyl group-containing monomer, a sulfonic group-containing monomer, a morpholine group-containing monomer, a glycidyl group-containing monomer, and combinations thereof.

Examples of the hydroxyl group-containing monomer may include (meth)acrylic acid hydroxyalkyl esters such as 2-hydroxyethyl(meth)acrylate, 4-hydroxybutyl(meth)acrylate, 5-hydroxypentyl(meth)acrylate, 6-hydroxyhexyl(meth)acrylate, 8-hydroxyoctyl(meth)acrylate, 10-hydroxydecyl(meth)acrylate, (4-hydroxymethylcyclohexyl)methyl(meth)acrylate, and the like; caprolactone-modified monomers such as caprolactone modified 2-hydroxyethyl(meth)acrylate, primary hydroxyl group-containing monomers such as 2-acryloyloxyethyl-2-hydroxyethyl-phthalic acid, N-methylol(meth)acrylamide, N-hydroxyethyl(meth)acrylamide, secondary hydroxyl group-containing monomers such as 2-hydroxypropyl(meth)acrylate, 2-hydroxybutyl(meth)acrylate, 2-hydroxy-3-phenoxypropyl(meth)acrylate, 3-chloro-2-hydroxypropyl(meth)acrylate, 2-hydroxy-3-phenoxypropyl(meth)acrylate, tertiary hydroxyl group-containing monomers such as 2,2-dimethyl-2-hydroxyethyl(meth)acrylate. Among the hydroxyl group-containing monomers, 2-hydroxyethyl(meth)acrylate is particularly preferable since it has little impurities such as di(meth)acrylate and is easy to be prepared.

Examples of the amino group-containing monomer may include dimethylaminoethyl (meth)acrylate, diethylaminoethyl (meth)acrylate. Examples of the carboxyl group-containing monomers may include acrylic acid, methacrylic acid, crotonic acid, maleic acid, maleic anhydride, itaconic acid, fumaric acid, acrylamide, N-glycolic acid, cinnamic acid, Michael addition product of (meth)acrylic acid (for example, acrylic acid dimer, methacrylic acid dimer, acrylic acid trimer, methacrylic acid trimer, acrylic acid tetramer, methacrylic acid tetramer), 2-(meth)acryloyloxyethyl dicarboxylic acid monoester (for example, 2-acryloyloxyethyl succinic acid monoester, 2-methacryloyloxyethyl succinic acid monoester, 2-acryloyloxyethyl phthalic acid monoester, 2-methacryloyloxyethyl phthalic acid monoester, 2-acryloyloxyethyl hexahydrophthalic acid monoester, 2-methacryloyloxyethyl hexahydrophthalic acid monoester). Examples of the sulfone-containing monomer may include olefin sulfones such as ethylene sulfone, allyl sulfone, meta allyl sulfone, and the like, 2-acrylamide-2-methylpropane sulfone, styrene sulfone, salts thereof. An example of the morpholine group-containing monomer may include 4-methylmorpholine, and examples of the glycidyl group-containing monomer may include glycidyl (meth)acrylate, allylglycidylether. The hydrophilic functional group-containing monomer may have a content of about 30 parts by weight or less, based on 100 parts by weight of a (meth)acrylic acid ester-based monomer. In order to reduce polarity of the adhesive composition, the content of the hydrophilic functional group-containing monomer with a large polarity, may be defined. Accordingly, specifically, there is provided an adhesive composition including the hydrophilic functional group-containing monomer having a content of about 30 parts by weight or less, more specifically, about 20 parts by weight or less, based on 100 parts by weight of the (meth)acrylic acid ester-based monomer.

The hydrophilic functional group-containing monomer includes a hydroxyl group (-OH), a carboxyl group (-COOH), to maintain a large polarity in most cases. Therefore, the composition includes the hydrophilic functional group-containing monomer having a content of 30 parts by weight or less, such that the overall polarity of the adhesive composition may be reduced, and accordingly, a dielectric constant may be decreased.

A polymer molecular weight of the (meth)acrylic acid ester-based monomer and the hydrophilic functional group-containing monomer may be 600,000 to 1,200,000. When the polymer molecular weight thereof is more than 1,200,000, there is a problem in that specific gravity of the adhesive composition is increased, and when the polymer molecular weight thereof is less than 600,000, durability may be reduced. Accordingly, the polymer molecular weight thereof has the above-described range according to the present invention, thereby securing processing stability and durability through the maintenance of the viscosity.

For example, the (meth)acrylic acid ester-based monomer is alkyl(meth)acrylate, but the present invention is not limited thereto. The alkyl of the alkyl(meth)acrylate may be linear or branched C₁-C₁₄ alkyl, specifically, C₁-C₈ alkyl. By using the alkyl(meth)acrylate having the above-described range of carbon atoms, a cured product of the adhesive composition for a touch panel may be controlled to have appropriate cohesive strength, peel strength and adhesive property.

The (meth)acrylic acid ester-based monomer may be at least one selected from the group consisting of methyl (meth)acrylate, ethyl (meth)acrylate, n-propyl (meth)acrylate, isopropyl (meth)acrylate, n-butyl (meth)acrylate, t-butyl (meth)acrylate, sec-butyl (meth)acrylate, pentyl (meth)acrylate, 2-ethylhexyl (meth)acrylate, 2-ethylbutyl (meth)acrylate, n-octyl (meth)acrylate, isooctyl (meth)acrylate, isononyl (meth)acrylate, lauryl (meth)acrylate, tetradecyl (meth)acrylate, and combinations thereof.

The adhesive composition for a touch panel includes an adhesion promoter. The adhesion promoter may be added so as to favorably polymerize the monomer included in the adhesive composition and to improve an adhesion level. In addition, by adding the adhesion promoter, the contents of the hydrophilic functional group-containing monomers are limited, such that adhesion property may be deteriorated, and polarity may be reduced, thereby inhibiting white turbidity phenomenon of the adhesive composition applied to a liquid display device, in external environment with high temperature and high humidity. The content of adhesion promoter is from 1 part by weight to 20 parts by weight, based on 100 parts by weight of a (meth)acrylic acid ester-based monomer. On the basis of 100 parts by weight of the (meth)acrylic acid ester-based monomer, when the content of the adhesion promoter is less than 1 part by weight, an effect of improving adhesion may not be sufficient, and when the content of the adhesion promoter is more than 20 parts by weight, self-cohesion phenomenon of the adhesive composition may occur, or non-reactant may be moved. Accordingly, the adhesion promoter has the above-described range of content according to the present invention, thereby maintaining compatibility with the adhesive composition and stably implementing physical properties.

The adhesion promoter is at least one selected from the group consisting of an amine-based liquid polymer, polyamine, a petroleum resin, polybutene, an acrylic modified resin, an acryloyl morpholine resin, and combinations thereof.

The adhesive composition for a touch panel may further include a photoinitiator. Specifically, the photoinitiator may have a content of 0.5 to 1.0 parts by weight, based on 100 parts by weight of the (meth)acrylic acid ester-based monomer. When the content of the photoinitiator is out of the above-described range, a number of molecules having a short bond length are generated, which may reduce durability. The photoinitiator is not limited in view of types, but may include one selected from the group consisting of a benzoin-based initiator, a hydroxy ketone-based initiator, an amino-ketone-based initiator, a caprolactam initiator and combinations thereof.

### Adhesive Film

In another exemplary embodiment of the present invention, there is provided an adhesive film including an adhesive layer which includes a cured product of the adhesive composition for a touch panel, the adhesive composition for a touch panel including a hydrophilic functional group-containing monomer, wherein a dielectric constant at a frequency of 100kHz to 2MHz is 3.5 or less.

In curing the adhesive composition for a touch panel, electron beams, proton beams, neutron beams, and the like, may be used in addition to rays such as deep-ultraviolet rays, ultraviolet rays, near-ultraviolet rays, infrared rays, and the like, or electromagnetic waves such as X-rays, y-rays. However, curing with ultraviolet ray irradiation is preferable in view of a curing rate, easy availability of an irradiation apparatus, the cost. Further, a light source for performing the ultraviolet ray irradiation may be a high pressure mercury lamp, an electrodeless lamp, an extra-high pressure mercury lamp, a carbon arc lamp, a xenon lamp, a metal halide lamp, a chemical lamp, a black light. For example, the high pressure mercury lamp may be used under condition of 5mJ/cm² to 3000mJ/cm², preferably, 10mJ/cm² to 1000mJ/cm². In addition, the electrodeless lamp may be used under condition of 2mJ/cm² to 1,500mJ/cm², preferably, 5 mJ/cm² to 500mJ/cm².

In addition, an irradiation time may vary depending on types of light source, distance between light source and a coated surface, a coating thickness, other conditions. However, generally, the irradiation time may be several seconds to tens of seconds, or in some cases, one second per several minutes.

A dielectric constant of the adhesive layer including the cured product of the adhesive composition for a touch panel, which is cured by the above-described curing method, may be 3.5 or less at a frequency of 100kHz to 2MHz. The dielectric constant at a frequency of 100kHz to 2MHz is 3.5 or less, which secures a low dielectric constant as compared to the related art. Accordingly, the adhesive composition may have increased sensitivity due to signal improvement to stimulus such as touch, or the like, and may provide an adhesive film having a fast response time due to the increased sensitivity.

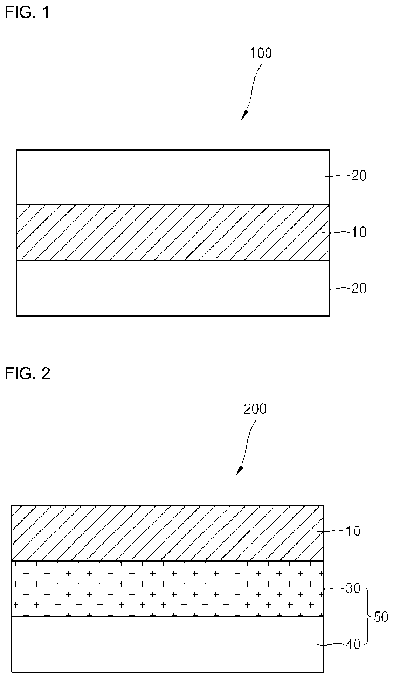

FIG. 1 is a cross-sectional view schematically illustrating an adhesive film according to an exemplary embodiment of the present invention, wherein the adhesive film 100 may include a substrate layer 20, an adhesive layer 10, and a substrate layer 20 from the top. The adhesive layer 10 may have a thickness of 50 µm to 300 µm, specifically, 50 µm to 150 µm. The substrate layer 20 has the above-described range of thickness, thereby implementing he adhesive film 100 capable of being applied to a thin touch panel or a thin touch screen and having excellent durability.

Specific types of the substrate layer 20 are not specifically limited, but for example, the substrate layer 20 may be a plastic film which is generally used in the art. For example, the substrate layer 20 may be one selected from the group consisting of polyethylene terephthalate, polytetrafluoroethylene, polyethylene, polypropylene, polybutene, polybutadiene, vinyl chloride copolymer, polyurethane, ethylene-vinyl acetate, ethylene-propylene copolymer, ethylene-ethyl acrylate copolymer, ethylene-methyl acrylate copolymer, polyimide, and combinations thereof. Specifically, the substrate layer 20 may be a polyethylene terephthalate film, but the present invention is not limited thereto.

The substrate layer 20 may have a thickness of 25 µm to 300 µm, specifically, 30 µm to 200 µm. The substrate layer 20 has the above-described range of thickness, thereby implementing the adhesive film 100 capable of being applied to a thin touch panel or a thin touch screen and having excellent durability.

### Touch Panel

In still another exemplary embodiment of the present invention, there is provided a touch panel according to claims 11 and 12 including: a conductive plastic film having a conductive layer formed on one surface; and an adhesive layer attached onto the conductive layer and including a cured product of the adhesive composition for a touch panel, the adhesive composition for a touch panel including a hydrophilic functional group-containing monomer, wherein a dielectric constant at a frequency of 100kHz to 2MHz is 3.5 or less.

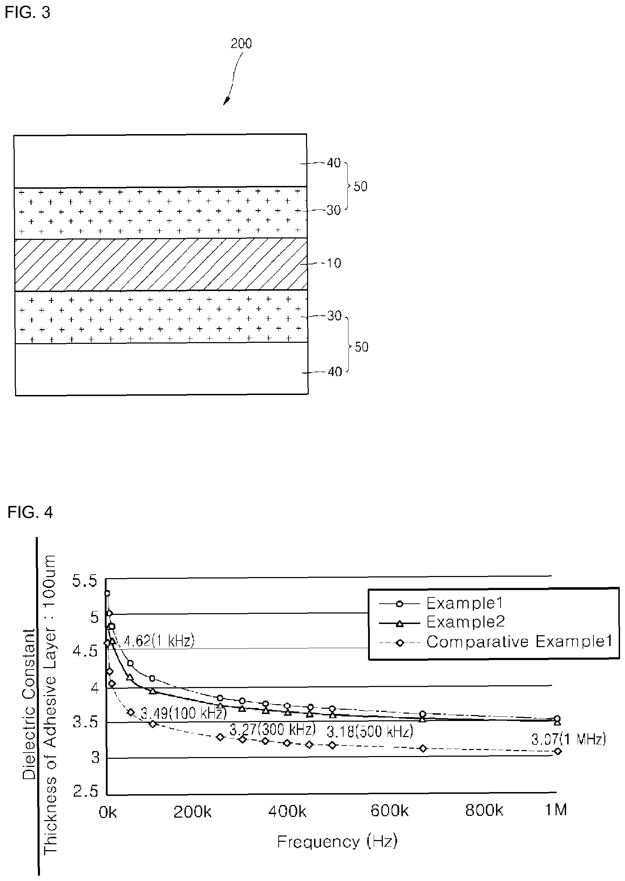

Referring to FIG. 2, the touch panel 200 may include a conductive plastic film 50 including a plastic substrate layer 40 and a conductive layer 30 formed on one surface of the plastic substrate layer 40, and may have a structure in which the adhesive layer 10 is attached onto one surface of the conductive layer 30 of the conductive plastic film 50. In addition, as shown in FIG. 3, the touch panel 200 may have a structure in which the adhesive layer 10 is attached onto surfaces of both conductive layers 30 of the conductive plastic films 50.

For example, the touch panel may be a capacitive-type touch panel. In addition, a specific structure of the touch panel or a method of forming the touch panel is not specifically limited as long as the above-described adhesive composition for a touch panel is applied, but general configurations in the art may be adopted to the specific structure or the method.

Specific kinds of the conductive plastic film 50 are not particularly limited, and conductive plastic films known in the art may be used as the conductive plastic film. For example, the conductive film 50 may be a transparent plastic film having an indium tin oxide (ITO) electrode layer formed on one surface thereof. Specifically, the transparent plastic film forming the plastic substrate layer 40 may be a polyethylene terephthalate film, a polytetrafluoroethylene film, a polyethylene film, a polypropylene film, a polybutene film, a polybutadiene film, a vinyl chloride copolymer film, a polyurethane film, an ethylene-vinyl acetate film, an ethylene-propylene copolymer film, an ethylene-ethyl acrylate copolymer film, an ethylene-methyl acrylate copolymer film, a polyimide film. However, the present invention is not limited thereto. More specifically, the plastic substrate layer 40 may be a polyethylene terephthalate (PET) film.

Hereinafter, specific Examples of the present invention will be provided. Meanwhile, Examples to be described below are just provided for specifically exemplifying or explaining the present invention, and accordingly, the present invention is not limited to the following Examples.

### <Example and Comparative Example>

### Example 1 (not according to the invention)

An adhesive composition was prepared by mixing 60 parts by weight of 2-EHA (ethylhexyl acrylate), 22 parts by weight of IBOA (isobornyl acrylate) and 18 parts by weight of HEA (hydroxyethyl acrylate), and adding 1-hydroxy cyclohexyl phenyl ketone (Irgacure 184, HCPK) as a photo-initiator and a coupling agent as another additive to the mixture. A coating solution was prepared by mixing toluene as a solvent, and a polyethylene terephthalate film (thickness: 75 µm) that was release-treated with the coating solution, was subjected to UV curing, followed by coating using a bar coater so that the adhesive layer has a thickness of 100 µm. Then, the film was cured by irradiation with ultraviolet rays for 10 minutes using a UV lamp, thereby manufacturing an adhesive film.

### Example 2

An adhesive film was manufactured by the same method as Example 1 above except for preparing an adhesive composition further including an acryloyl morpholine resin as an adhesion promoter.

### Examples 3 and 4

Adhesive films were manufactured by the same method as Example 2 above except for changing a content ratio of the adhesive composition and a content ratio of the adhesion promoter as shown in Table 1 below.

### Comparative Examples 1 to 3

Adhesive films were manufactured by the same method as Example 1 above except for changing a content ratio of the adhesive composition as shown in Table 1 below.

**[Table 1]**

| | EHA | IBOA | HEA | Adhesion Promoter |
|---|---|---|---|---|
| Example 1 | 60 | 22 | 18 | 0 |
| Example 2 | 60 | 22 | 15 | 3 |
| Example 3 | 50 | 30 | 15 | 5 |
| Example 4 | 50 | 25 | 15 | 10 |
| Comparative Example 1 | 60 | 10 | 30 | 0 |
| Comparative Example 2 | 50 | 25 | 25 | 0 |
| Comparative Example 3 | 70 | 30 | 0 | 0 |

### <Experimental Example 1> Physical properties of adhesive film

Physical properties of the adhesive films manufactured by Examples and Comparative Examples, were manufactured, and the results thereof were shown in Table 2 below.
1) Measurement of dielectric constant: A dielectric constant of the manufactured adhesive films each having a diameter size of 5 mm, was measured by E4980 LCR Meter manufactured by Agilent Technologies.
2) Measurement of peel strength: The adhesive film was manufactured into a size of 25mm x 40mm (length x width), and attached onto a glass or on a non-treated PET by moving a 2kg roller back and forth once. Then, peel strength was measured at the time of being peeled by pulling the attached adhesive films at 300mm/min in a direction of 180 degrees with respect to a surface of the attached adhesive film.
3) Measurement of white turbidity phenomenon: The adhesive films attached onto the glass were stored under conditions of 85°C and 85% RH for 3 days, and then observed whether white spot occurs.

**[Table 2]**

| | Dielectric Constant (100kHz) | Peel Strength (g/in) | | White Turbidity Phenomenon |
|---|---|---|---|---|
| | | Glass | PET | |
| Example 1 | 3.5 | 2018 | 1713 | Yes |
| Example 2 | 3.4 | 2067 | 1736 | No |
| Example 3 | 3.5 | 2025 | 1750 | No |
| Example 4 | 3.3 | 2040 | 1790 | No |
| Comparative Example 1 | 4.0 | 1895 | 1606 | Yes |
| Comparative Example 2 | 3.8 | 1805 | 1587 | Yes |
| Comparative Example 3 | - | 1610 | 1580 | Yes |

In Examples 1 to 4, all of the adhesive films formed by using the adhesive compositions including 30 parts by weight or less of the hydrophilic functional group-containing monomer, based on 100 parts by weight of the (meth)acrylic acid ester-based monomer, had a dielectric constant of 3.5 or less at 100 kHz. The dielectric constant of the adhesive films according to Examples 1 to 4 were lower than that of the adhesive films according to Comparative Examples 1 and 2 formed by using the adhesive compositions including 30 parts by weight or more of the hydrophilic functional group-containing monomer, which could be appreciated that the adhesive films according to the present invention had improved sensitivity to touch (FIG. 4). In addition, the adhesive film of Comparative Example 3 formed by using the adhesive composition without containing the hydrophilic functional group had a difficulty in measuring the dielectric constant.

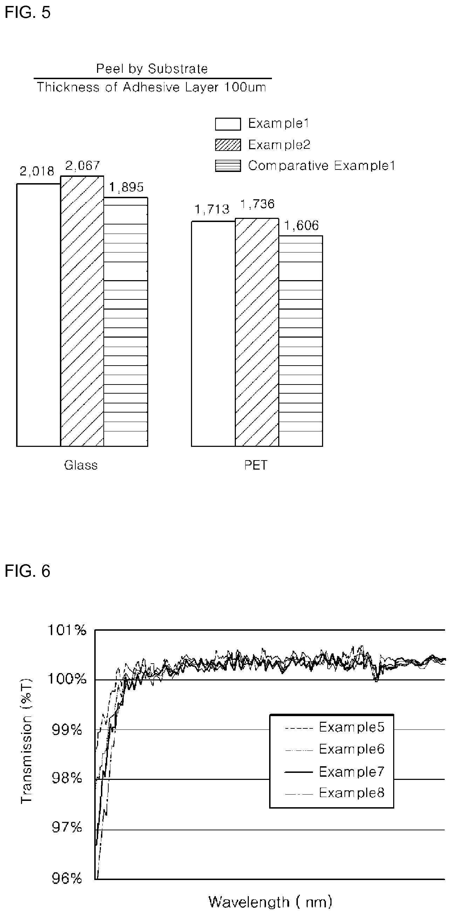

In view of the peel strength, there was a little difference depending on the substrate to which the adhesive film is attached, but it could be appreciated that Examples had higher peel strength than that of Comparative Examples, and accordingly, rework property of the substrates were also more excellent in Examples (FIG. 5).

Specifically, in Example 1, due to the controlling of the hydrophilic functional group-containing monomer, the overall polarity of the adhesive film was reduced, which decreased the dielectric constant, but white turbidity phenomenon could occur. Accordingly, in Examples 2 to 4, the adhesive compositions further including the adhesion promoter having a predetermined content were used to inhibit occurrence of the white turbidity phenomenon even in external environment with high temperature and high humidity, or the like.

### <Experimental Example 2> Measurement of physical and optical properties depending on thickness of adhesive layer

Peel strength and optical properties of the adhesive films manufactured by Example 3 above, having a thickness of 50 µm (Example 5), 75 µm (Example 6), 125 µm (Example 7), and 150 µm (Example 8), respectively, were measured, and results thereof were shown in Table 3 below.
1) Peel strength: Each adhesive film was manufactured into a size of 25mm x 40mm (length x width), and attached onto a non-treated PET by moving a 2kg roller back and forth once. Then, peel strength was measured at the time of being peeled by pulling the attached adhesive film at 300mm/min in a direction of 180 degrees with respect to a surface of the attached adhesive film.
2) Transmission: Each adhesive film was attached onto a glass, and transmission of each of the attached adhesive films was measured by CM-5 manufactured by Conika Minolta company.
3) Color index and Haze: Each adhesive film was attached onto a glass, and color index and haze of each of the attached adhesive films was measured by Guard-Plus manufactured by BYK company.

**[Table 3]**

| | Thickness of Adhesive Layer | Peel Strength (g/in) | Transmission (%T) | Color Index | | | Haze (%) |
|---|---|---|---|---|---|---|---|
| | | | | L* | a* | b* | |
| Example 5 | 50 | 1710 | 100.5 | 96.77 | -0.24 | 0.16 | 0.28 |
| Example 6 | 75 | 1775 | 100.6 | 96.76 | -0.25 | 0.18 | 0.27 |
| Example 7 | 125 | 2018 | 100.8 | 96.74 | -0.28 | 0.16 | 0.28 |
| Example 8 | 100 | 2088 | 100.4 | 96.72 | -0.28 | 0.19 | 0.29 |

Physical properties of the adhesive films of Examples 5 to 8 were measured, wherein the adhesive films of Examples 5 to 8 were made by changing the thickness of the adhesive layer of Example 3 having the best experimental results such as a low dielectric constant and no occurrence of white turbidity phenomenon. As a result, it could be appreciated that Examples 5 to 8 secured a predetermined level or more of peel strength.

In addition, when the adhesive film is utilized by being attached onto a liquid crystal display, optical performance such as transmission, haze, and the like, needs to be secured. Referring to FIG. 6, it was confirmed that Examples 5 to 8 had transmission of 100%T or more at a wavelength of 400 nm or more, such that it could be appreciated that a predetermined level or more of optical properties were exhibited even in various thicknesses of the adhesive layer.

Further, it was determined that in most cases, optical properties were exhibited when color index was L* of about 97, a* of about -0.2, and b* of about 0.20, and a haze was 0.3%. Regarding this, Examples 5 to 8 had the same level as the most cases, and accordingly, it was confirmed that a predetermined level or more of optical properties were secured in various thicknesses of the adhesive layer.

## Claims

1. An adhesive composition for a touch panel, comprising:
a hydrophilic functional group-containing monomer,
a (meth)acrylic acid ester-based monomer, and
an adhesion promoter,
wherein the adhesion promoter is at least one selected from the group consisting of an amine-based liquid polymer, polyamine, a petroleum resin, polybutene, an acrylic modified resin, an acryloyl morpholine resin, and combinations thereof,
wherein the adhesion promoter have a content of 1 part by weight to 20 parts by weight, based on 100 parts by weight of a (meth)acrylic acid ester-based monomer, and
wherein a dielectric constant (as measured according to the method in the experimental part) of the adhesive composition at a frequency of 100kHz to 2MHz is 3.5 or less, and
wherein the (meth)acrylic acid ester-based monomer is an alkyl (meth)acrylate.

2. The adhesive composition for a touch panel of claim 1, wherein the hydrophilic functional group-containing monomer is at least one selected from the group consisting of a hydroxyl group-containing monomer, an amino group-containing monomer, a carboxyl group-containing monomer, a sulfonic group-containing monomer, a morpholine group-containing monomer, a glycidyl group-containing monomer, and combinations thereof.

3. The adhesive composition for a touch panel of claim 1, wherein the hydrophilic functional group-containing monomer has a content of 30 parts by weight or less, based on 100 parts by weight of a (meth)acrylic acid ester-based monomer.

4. The adhesive composition for a touch panel of claim 3, wherein the (meth)acrylic acid ester-based monomer is alkyl(meth)acrylate, and alkyl of the alkyl(meth)acrylate is linear or branched C₁-C₁₄ alkyl.

5. The adhesive composition for a touch panel of claim 3, wherein the (meth)acrylic acid ester-based monomer is at least one selected from the group consisting of methyl (meth)acrylate, ethyl (meth)acrylate, n-propyl (meth)acrylate, isopropyl (meth)acrylate, n-butyl (meth)acrylate, t-butyl (meth)acrylate, sec-butyl (meth)acrylate, pentyl (meth)acrylate, 2-ethylhexyl (meth)acrylate, 2-ethylbutyl (meth)acrylate, n-octyl (meth)acrylate, isooctyl (meth)acrylate, isononyl (meth)acrylate, lauryl (meth)acrylate, tetradecyl (meth)acrylate, and combinations thereof.

6. The adhesive composition for a touch panel of claim 1, further comprising:
a photoinitiator.

7. The adhesive composition for a touch panel of claim 6, wherein the photoinitiator is at least one selected from the group consisting of a benzoin-based initiator, a hydroxy ketone-based initiator, an amino-ketone-based initiator, a caprolactam initiator and combinations thereof.

8. An adhesive film comprising an adhesive layer including a cured product of the adhesive composition for a touch panel according to any one of claims 1 to 7.

9. The adhesive film of claim 8, wherein a dielectric constant (as measured according to the method in the experimental part) of the adhesive layer at a frequency of 100kHz to 2MHz is 3.5 or less.

10. The adhesive film of claim 8, wherein the adhesive layer has a thickness of 50 µm to 300 µm.

11. A touch panel comprising:
a conductive plastic film having a conductive layer formed on one surface; and
an adhesive layer attached onto the conductive layer and including a cured product of the adhesive composition for a touch panel according to any one of claims 1 to 7.

12. The touch panel of claim 11, wherein the conductive plastic film is a polyethylene terephthalate film having an indium tin oxide (ITO) (conductive metal oxide) layer formed on one surface thereof.

## Patentansprüche

1. Klebstoffzusammensetzung für ein Touchpanel, umfassend:
ein hydrophile funktionelle Gruppe enthaltendes Monomer,
ein (Meth)acrylsäureester-basiertes Monomer und
einen Haftvermittler,
wobei der Haftvermittler mindestens eines ausgewählt aus der Gruppe bestehend aus einem aminbasierten Flüssigpolymer, Polyamin, einem Petroleumharz, Polybuten, einem acrylmodifizierten Harz, einem Acryloylmorpholin-Harz und Kombinationen davon ist,
wobei der Haftvermittler einen Gehalt von 1 Gewichtsteil bis 20 Gewichtsteilen, bezogen auf 100 Gewichtsteile eines (Meth)acrylsäureester-basierten Monomers, hat und
wobei eine Dielektrizitätskonstante (wie gemäß dem Verfahren im experimentellen Teil gemessen) der Klebstoffzusammensetzung bei einer Frequenz von 100 kHz bis 2 MHz 3,5 oder weniger ist und
wobei das (Meth)acrylsäureester-basierte Monomer ein Alkyl(meth)acrylat ist.

2. Klebstoffzusammensetzung für ein Touchpanel nach Anspruch 1, wobei das hydrophile funktionelle Gruppe enthaltende Monomer mindestens eines ausgewählt aus der Gruppe bestehend aus einem Hydroxylgruppe enthaltenden Monomer, einem Aminogruppe enthaltenden Monomer, einem Carboxylgruppe enthaltenden Monomer, einem Sulfongruppe enthaltenden Monomer, einem Morpholingruppe enthaltenden Monomer, einem Glycidylgruppe enthaltenden Monomer und Kombinationen davon ist.

3. Klebstoffzusammensetzung für ein Touchpanel nach Anspruch 1, wobei das hydrophile funktionelle Gruppe enthaltende Monomer einen Gehalt von 30 Gewichtsteilen oder weniger, bezogen auf 100 Gewichtsteile eines (Meth)acrylsäureester-basierten Monomers hat.

4. Klebstoffzusammensetzung für ein Touchpanel nach Anspruch 3, wobei das (Meth)acrylsäureester-basierte Monomer ein Alkyl(meth)acrylat ist und Alkyl des Alkyl(meth)acrylats lineares oder verzweigtes C₁-C₁₄-Alkyl ist.

5. Klebstoffzusammensetzung für ein Touchpanel nach Anspruch 3, wobei das (Meth)acrylsäureester-basierte Monomer mindestens eines ausgewählt aus der Gruppe bestehend aus Methyl(meth)acrylat, Ethyl(meth)acrylat, n-Propyl(meth)acrylat, Isopropyl(meth)acrylat, n-Butyl(meth)acrylat, t-Butyl(meth)acrylat, sec-Butyl(meth)acrylat, Pentyl(meth)acrylat, 2-Ethylhexyl(meth)acrylat, 2-Ethylbutyl(meth)acrylat, n-Octyl(meth)acrylat, Isooctyl(meth)acrylat, Isononyl(meth)acrylat, Lauryl(meth)acrylat, Tetradecyl(meth)acrylat und Kombinationen davon ist.

6. Klebstoffzusammensetzung für ein Touchpanel nach Anspruch 1, ferner umfassend:
einen Photoinitiator.

7. Klebstoffzusammensetzung für ein Touchpanel nach Anspruch 6, wobei der Photoinitiator mindestens einer ausgewählt aus der Gruppe bestehend aus einem benzoinbasierten Initiator, einem hydroxyketonbasierten Initiator einem aminoketonbasierten Initiator, einem Caprolactaminitiator und Kombinationen davon ist.

8. Klebstofffilm umfassend eine Klebstoffschicht enthaltend ein ausgehärtetes Produkt der Klebstoffzusammensetzung für ein Touchpanel gemäß einem der Ansprüche 1 bis 7.

9. Klebstofffilm nach Anspruch 8, wobei eine Dielektrizitätskonstante (wie gemäß dem Verfahren im experimentellen Teil gemessen) der Klebstoffschicht bei einer Frequenz von 100 kHz bis 2 MHz 3,5 oder weniger ist.

10. Klebstofffilm nach Anspruch 8, wobei die Klebstoffschicht eine Dicke von 50 µm bis 300 µm hat.

11. Touchpanel umfassend:
einen leitfähigen Plastikfilm mit einer Leitungsschicht, die an einer Oberfläche gebildet ist; und
eine Klebstoffschicht, die an die Leitschicht angebracht ist und ein ausgehärtetes Produkt der Klebstoffzusammensetzung für ein Touchpanel gemäß einem der Ansprüche 1 bis 7 enthält.

12. Touchpanel gemäß Anspruch 11, wobei der leitfähige Plastikfilm ein Polyethylenterephthalatfilm mit einer Indiumzinnoxid (ITO) (leitfähiges Metalloxid) Schicht, die an einer Oberfläche davon gebildet ist, ist.

## Revendications

1. Composition d'adhésif pour écran tactile, comprenant :
un monomère contenant un groupe fonctionnel hydrophile,
un monomère à base d'un ester d'acide (méth)acrylique, et
un promoteur d'adhérence,
dans laquelle le promoteur d'adhérence au moins un sélectionné dans le groupe constitué d'un polymère liquide à base d'amine, d'une polyamine, d'une résine de pétrole, d'un polybutène, d'une résine acrylique modifiée, d'une résine d'acryloyl morpholine, et des combinaisons de ceux-ci,
dans laquelle le promoteur d'adhérence présente une teneur de 1 partie en poids à 20 parties en poids, sur la base de 100 parties en poids d'un monomère à base d'un ester d'acide (méth)acrylique, et
dans laquelle une constante diélectrique (telle que mesurée selon le procédé dans la partie expérimentale) de la composition d'adhésif à une fréquence de 100 kHz à 2 MHz est de 3,5 ou moins, et
dans laquelle le monomère à base d'un ester d'acide (méth)acrylique est un (méth)acrylate d'alkyle.

2. Composition d'adhésif pour écran tactile selon la revendication 1, dans laquelle le monomère contenant un groupe fonctionnel hydrophile est au moins un sélectionné dans le groupe constitué d'un monomère contenant un groupe hydroxyle, d'un monomère contenant un groupe amino, d'un monomère contenant un groupe carboxyle, d'un monomère contenant un groupe sulfonique, d'un monomère contenant un groupe morpholine, d'un monomère contenant un groupe glycidyle, et des combinaisons de ceux-ci.

3. Composition d'adhésif pour écran tactile selon la revendication 1, dans laquelle le monomère contenant un groupe fonctionnel hydrophile présente une teneur de 30 parties en poids ou moins, sur la base de 100 parties en poids d'un monomère à base d'un ester d'acide (méth)acrylique.

4. Composition d'adhésif pour écran tactile selon la revendication 3, dans laquelle le monomère à base d'un ester d'acide (méth)acrylique est un (méth)acrylate d'alkyle, et l'alkyle du (méth)acrylate d'alkyle est un alkyle en C₁ à C₁₄ linéaire ou ramifié.

5. Composition d'adhésif pour écran tactile selon la revendication 3, dans laquelle le monomère à base d'un ester d'acide (méth)acrylique est au moins un sélectionné dans le groupe constitué du (méth)acrylate de méthyle, du (méth)acrylate d'éthyle, du (méth)acrylate de n-propyle, du (méth)acrylate d'isopropyle, du (méth)acrylate de n-butyle, du (méth)acrylate de t-butyle, du (méth)acrylate de sec-butyle, du (méth)acrylate de pentyle, du (méth)acrylate de 2-éthylhexyle, du (méth)acrylate de 2-éthylbutyle, du (méth)acrylate de n-octyle, du (méth)acrylate d'isooctyle, du (méth)acrylate d'isononyle, du (méth)acrylate de lauryle, du (méth)acrylate de tétradécyle, et des combinaisons de ceux-ci.

6. Composition d'adhésif pour écran tactile selon la revendication 1, comprenant en outre :
un photoinitiateur.

7. Composition d'adhésif pour écran tactile selon la revendication 6, dans laquelle le photoinitiateur est au moins un sélectionné dans le groupe constitué d'un initiateur à base de benzoïne, d'un initiateur à base d'hydroxy cétone, d'un initiateur à base d'amino cétone, d'un initiateur de type caprolactame et des combinaisons de ceux-ci.

8. Film adhésif comprenant une couche adhésive comprenant un produit durci de la composition d'adhésif pour écran tactile selon l'une quelconque des revendications 1 à 7.

9. Film adhésif selon la revendication 8, dans lequel la constante diélectrique (telle que mesurée selon le procédé dans la partie expérimentale) de la couche adhésive à une fréquence de 100 kHz à 2 MHz est de 3,5 ou moins.

10. Film adhésif selon la revendication 8, dans lequel la couche adhésive présente une épaisseur de 50 µm à 300 µm.

11. Écran tactile comprenant :
un film plastique conducteur présentant une couche conductrice formée sur une surface ; et
une couche adhésive fixée à la couche conductrice et comprenant un produit durci de la composition d'adhésif pour écran tactile selon l'une quelconque des revendications 1 à 7.

12. Écran tactile selon la revendication 11, dans lequel le film plastique conducteur est un film de polytéréphtalate d'éthylène présentant une couche d'oxyde d'indium et d'étain (ITO) (oxyde métallique conducteur) formée sur une surface de celui-ci.
